# EUROPEAN PATENT SPECIFICATION

(11) **EP 3 070 791 B1**
(45) Date of publication and mention of the grant of the patent: **25.09.2019**
(21) Application number: 14862763.1
(22) Date of filing: 18.08.2014
(51) Int. Cl.: H01S 3/067, H01S 3/131, H01S 3/13, H01S 3/30, H01S 3/0941, H01S 3/094, H01S 3/16

(54) **FIBER LASER DEVICE**
FASERLASERVORRICHTUNG
DISPOSITIF LASER À FIBRE

(30) Priority: 14.11.2013 JP 2013236342
(43) Date of publication of application: 21.09.2016
(73) Proprietor: Fujikura Ltd., Tokyo 135-8512 (JP)
(72) Inventor: IKOMA, Shinya, Sakura-shi, Chiba 285-8550 (JP); KITABAYASHI, Tomoharu, Sakura-shi, Chiba 285-8550 (JP)
(74) Representative: Cabinet Plasseraud
(86) International application number: PCT/JP2014/071561
(87) International publication number: WO 2015/072198

(56) References cited:
- EP-A1- 1 763 167
- WO-A1-2010/142039
- JP-A- S5 489 681
- JP-A- H06 268 305
- JP-A- 2000 323 769
- JP-A- 2001 015 845
- JP-A- 2004 014 708
- JP-A- 2008 042 096
- JP-A- 2012 185 235
- JP-A- 2012 527 018
- US-A1- 2006 165 343
- US-A1- 2009 091 819
- US-A1- 2010 188 735
- US-A1- 2011 091 155

## Description

### Technical Field

The present invention relates to a fiber laser device that can control a power of emission light, and is suitable for a fiber laser device that controls emission light having large power.

### Background Art

A fiber laser device has been used in various fields such as a laser machining field or a medical field in terms of having excellent capability to collect light, having a high power density, and obtaining narrow beam spot light.

In such a fiber laser device, light emitted from the fiber laser device is reflected at a workpiece or the like, and the reflected light may be incident from an emitting end of the fiber laser device. In addition, not only when the emission light is incident again, the light may also be reflected at a connection portion or the like of an optical fiber in the fiber laser device. Particularly, in a fiber laser device emitting pulse-like light, although an average power of the emission light per unit time is small, a peak power of the pulse-like emission light is large, and thus a peak power of reflected light tends to increase. The reflected light is amplified in the fiber laser device, the reflected light is incident on an area such as a pumping light source on which light should not be incident, and thus the area may be damaged.

The following Patent Literature 1 discloses a fiber laser device that measures intensity of return light directed toward a pumping light source from a fiber doped with a rare earth element and reduces emission of the pumping light source when the intensity of the return light exceeds a predetermined value.

[Patent Literature 1] JP-B-4699131

WO 2010/142039 A1 discloses a fiber laser amplifier for amplifying a signal light from a high power pulsed laser, the amplifier comprising a rare-earth doped amplification optical fiber and a pump light source, a detector that monitors counter-propagating light moving backwards through the amplifier, and a controller coupled to the detector that controls a power of the pump light based on the power of the light detected by the detector.

US 2006/165343 A1 discloses a fiber laser, including an actively doped amplifying fiber between first and second resonator mirrors, and including a sensor located to receive leaked light from a fiber splice located at the emission side of the high reflectivity mirror. Feedback is provided responsive to one or more properties of the sensed light so as to adjust one or more performance characteristics of the amplifier.

### Summary of Invention

According to the fiber laser device disclosed in Patent Literature 1, the damage of the fiber laser device can be prevented by adjustment of intensity of pumping light. However, a fiber laser device which can control a power of an emission light with higher accuracy by controlling a power of the pumping light with higher accuracy is demanded. In particular, a power of light emitted from the fiber laser device tends to increase in recent years, and thus there is a demand for control the power of the emission light with higher accuracy when the power of the emission light is large.

Accordingly, an object of the present invention is to provide a fiber laser device capable of controlling the emission light having the large power with high accuracy.

To achieve the above object, a fiber laser device of the present invention is defined in claim 1.

The stimulated Raman scattering light is light that is generated when a power density of the light propagated through the optical fiber is high. Accordingly, when the signal light is amplified in the amplification optical fiber, the stimulated Raman scattering light tends to be generated from the signal light propagated through the amplification optical fiber or the signal light emitted from the amplification optical fiber. The power of the stimulated Raman scattering light exponentially increases relative to the power of the signal light. That is, a change rate of the power of the stimulated Raman scattering light becomes larger than a change rate of the power of the signal light in a region at which the power of the signal light is large. Therefore, the power of the wavelength component of the stimulated Raman scattering light is detected in preference to that of the wavelength component of the signal light, the power of the pumping light is controlled based on the detected power of the light, and thus it is possible to finely adjust the power of the pumping light in the region at which the power of the signal light serving as a base of the stimulated Raman scattering light is large. Thus, it is possible to control the power of the emission light having the large power with high accuracy.

In the present specification, the signal light indicates light that is amplified by the amplification optical fiber, and the light does not need to contain a signal.

The fiber laser device of the invention includes a first mirror that is provided at one side of the amplification optical fiber to reflect the signal light; and a second mirror that is provided at the other side of the amplification optical fiber to reflect the signal light at reflectance lower than that of the first mirror.

With such a configuration, the fiber laser device is a resonance-type fiber laser device. Then, the power of the pumping light can be finely adjusted based on the detected power of the wavelength component of the stimulated Raman scattering light, in the region at which the power of the signal light is large, and the power of a resonating signal light can be controlled with high accuracy.

In accordance with the invention the detector is disposed at a side opposite to the amplification optical fiber using the first mirror as a reference.

Since most of the signal light is reflected at the first mirror, the light transmitted through the first mirror does not contain the signal light so much. Accordingly, when the power of the wavelength component of the stimulated Raman scattering light, which is an object to be detected, is defined as a signal and the power of the wavelength component of the signal light is defined as noise, S/N (signal-to-noise ratio) becomes high. In addition, since the second mirror side is an emission side of the signal light in the resonance-type fiber laser device, the power of the signal light transmitted through the first mirror is remarkably small compared to the power of the light transmitted through the second mirror. Therefore, the detector can be prevented from being damaged by the signal light, which is not an object to be detected.

Further, in this case, the detector may include a light receiving portion that receives light transmitted through the first mirror, and the light receiving portion may have light receiving sensitivity with respect to the wavelength component of the stimulated Raman scattering light higher than light receiving sensitivity with respect to the wavelength component of the signal light.

Alternatively, but not in accordance with the invention the fiber laser device may further include the signal light source that emits the signal light incident on the amplification optical fiber. In this case, the fiber laser device can be a Master Oscillator - Power Amplifier (MO-PA) fiber laser device rather than the resonance-type fiber laser device described above. Even in this fiber laser device, the power of the pumping light can be finely adjusted in the region at which the power of the signal light is large, and the power of the emission light can be controlled with high accuracy.

Further, in the fiber laser device, the detector may include: a light branch portion that branches some of the light emitted from the amplification optical fiber; and a light receiving portion that receives the branched light, and the light receiving portion may have light receiving sensitivity with respect to the wavelength component of the stimulated Raman scattering light higher than light receiving sensitivity with respect to the wavelength component of the signal light.

With such a configuration of the detector, it is possible to preferentially detect the power of the wavelength component of the stimulated Raman scattering light without using a special part for separating the signal light and the stimulated Raman scattering light from each other. Accordingly, the fiber laser device can have a simple configuration.

Alternatively, in the fiber laser device, the detector may include: a light branch portion that branches some of the light emitted from the amplification optical fiber; and a light receiving portion that receives the branched light, and the light branch portion may branch the wavelength component of the stimulated Raman scattering light in preference to the wavelength component of the signal light.

Since the wavelength component of the stimulated Raman scattering light is preferentially branched in the detector, the loss of the signal light can be suppressed. In particular, when the coupler is used as a light branch portion, which is obtained by integral fusion splicing, in a longitudinal direction, of a part of the optical fiber through which the signal light is propagated and a part of the optical fiber through which the wavelength component of the branched stimulated Raman scattering light is propagated, it is possible to branch the wavelength component of the stimulated Raman scattering light and propagate it to the light receiving portion in a state where the loss of the wavelength component of the stimulated Raman scattering light is reduced. For this reason, the wavelength component of the stimulated Raman scattering light can be easily detected.

Alternatively, in the fiber laser device, the detector may include: a light branch portion that branches some of the light emitted from the amplification optical fiber; an optical filter that transmits the wavelength component of the stimulated Raman scattering light in preference to the wavelength component of the signal light, out of the branched light; and a light receiving portion that receives the light transmitted through the optical filter.

The optical filter is excellent in controllability of the wavelength of the transmitted light. Therefore, it is possible to freely set a control of S/N when the wavelength component of the stimulated Raman scattering light is defined as a signal to be received by the light receiving portion and another light is defined as noise. In particular, when the optical filter is configured to transmit only the wavelength component of the stimulated Raman scattering light, the S/N can also become the best condition.

Alternatively, in the fiber laser device, the detector may include: a photothermal conversion portion that absorbs some of the light emitted from the amplification optical fiber and converts the absorbed light into heat; and a temperature detector that detects a temperature of the photothermal conversion portion, and the photothermal conversion portion may be configured such that absorption efficiency of the wavelength component of the stimulated Raman scattering light is higher than that of the wavelength component of the signal light.

With such a configuration of the detector, it is possible to detect the power of the wavelength component of the stimulated Raman scattering light without using a light receiving portion. Accordingly, the fiber laser device can have a simple configuration.

Further, in the fiber laser device, the controller preferably controls the power of the pumping light to be small when the power of the light detected by the detector is equal to or greater than a predetermined magnitude. In this case, the controller may control the power of the pumping light to be zero when the power of the light detected by the detector is equal to or greater than a predetermined magnitude.

When the power of the pumping light becomes smaller or zero, the power of the emission light can become smaller or zero. Accordingly, even when the emission light is incident again onto the amplification optical fiber by being reflected at a machining body or the like and is amplified as signal light, the power density of light in the amplification optical fiber can be suppressed to be low.

Further, the controller may return the power of the pumping light to an original power when the power of the light detected by the detector is smaller than the predetermined magnitude after the power of the pumping light becomes small. Further, the controller may return the power of the pumping light to an original power when the power of the light detected by the detector is smaller than the predetermined magnitude after the power of the pumping light becomes zero.

The surrounding environment of the fiber laser device changes with the lapse of time. For example, as described above, even when the reflected light is incident on the amplification optical fiber and is amplified as the signal light, immediately after the power of the pumping light becomes smaller or zero, the state of the reflected light may be changed in some cases. Accordingly, when the power of the light detected by the detector is smaller than a predetermined magnitude, even when the power of the pumping light is returned to an original power, the power of the light detected again by the detector is not necessarily equal to or larger than a predetermined magnitude. By such control, it is possible to emit the light having the large power as possible.

As described above, according to the present invention, the fiber laser device is provided which can control the emission light having the large power with high accuracy.

### Brief Description of Drawings

FIG. 1 is a diagram illustrating a fiber laser device according to a first embodiment of the present invention.
FIG. 2 is a diagram illustrating a relation between a power of signal light and a power of stimulated Raman scattering light generated from the signal light.
FIGS. 3A and 3B are diagrams for comparing the power of the signal light with the power of the stimulated Raman scattering light.
FIG. 4 is a diagram illustrating a fiber laser device according to a second example useful for understanding the present invention.
FIG. 5 is an enlarged view of the vicinity of a connection portion between a second optical fiber and a delivery fiber illustrated in FIG. 4.
FIG. 6 is a diagram illustrating a state of using a light scattering portion formed in a core of the delivery fiber as a light branch portion.
FIG. 7 is a diagram illustrating a fiber laser device according to a third example useful for understanding the present invention.
FIG. 8 is a diagram illustrating a state where a bending portion of the delivery fiber is used as a light branch portion.
FIG. 9 is a diagram illustrating a state where a slant FBG is used as a light branch portion.
FIG. 10 is a diagram illustrating a fiber laser device according to a fourth example useful for understanding the present invention.
FIG. 11 is a diagram illustrating a fiber laser device according to a fifth example useful for understanding the present invention.
FIG. 12 is a diagram illustrating a fiber laser device according to a sixth example not in accordance with the present invention.

### Description of Embodiments

Preferred embodiments of a fiber laser device according to the present invention will be described below in detail with reference to the accompanying drawings.

### (First Embodiment)

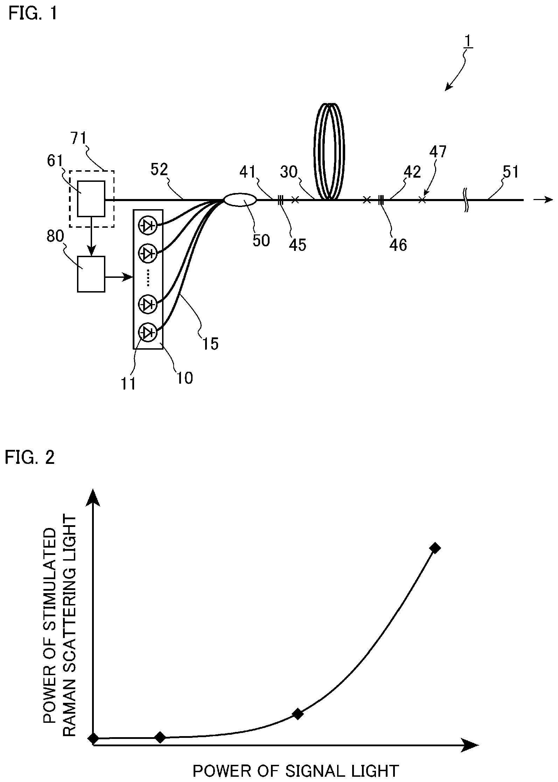

FIG. 1 is a diagram illustrating a fiber laser device according to a first embodiment of the present invention. As illustrated in FIG. 1, a fiber laser device 1 of this embodiment includes, as main components, a pumping light source 10 that emits pumping light, an amplification optical fiber 30 on which the pumping light emitted from the pumping light source 10 is incident and to which an active element pumped by the pumping light is doped, a first optical fiber 41 that is connected to one end of the amplification optical fiber 30, a first fiber bragg grating (FBG) 45 that is provided as a first mirror in the first optical fiber 41, a combiner 50 through which the pumping light is incident on the first optical fiber 41, a second optical fiber 42 that is connected to the other end of the amplification optical fiber 30, a second FBG 46 that is provided as a second mirror in the second optical fiber 42, a delivery fiber 51 that is connected to the second optical fiber 42, a light receiving portion 61 that receives light transmitted through the first FBG 45, and a controller 80 that controls the pumping light source 10. A resonator is formed by the amplification optical fiber 30, the first FBG 45, and the second FBG 46, and the fiber laser device 1 of this embodiment is a resonator-type fiber laser device.

The pumping light source 10 includes a plurality of laser diodes 11 and emits the pumping light with a wavelength which pumps the active element doped into the amplification optical fiber 30. Each of the laser diodes 11 of the pumping light source 10 is connected to the pumping fiber 15, and light emitted from the laser diodes 11 is propagated through the pumping fiber 15 which is optically connected to each of the laser diodes 11. An example of the pumping fiber 15 is a multi-mode fiber, and in this case, the pumping light is propagated as the multi-mode light through the pumping fiber 15. When the active element doped into the amplification optical fiber 30 is ytterbium as will be described below, a wavelength of the pumping light is, for example, 915 nm.

The amplification optical fiber 30 includes a core, an inner cladding that closely surrounds an outer peripheral surface of the core, an outer cladding that covers an outer peripheral surface of the inner cladding, and a covering layer that covers an outer peripheral surface of the outer cladding. Examples of a material forming the core of the amplification optical fiber 30 include an element, such as germanium that increases a refractive index, and quartz doped with an active element such as ytterbium (Yb) pumped by light emitted from the pumping light source 10. An example of the active element is a rare earth element, and examples of the rare earth element include thulium (Tm), cerium (Ce), neodymium (Nd), europium (Eu), and erbium (Er) in addition to the ytterbium (Yb). In addition to the rare earth element, bismuth (Bi) is further included as an example of the active element. An example of a material forming the inner cladding of the amplification optical fiber 30 is undoped pure quartz. In addition, an example of a material forming the outer cladding of the amplification optical fiber 30 is a resin having a refractive index lower than that of the inner cladding, and an example of a material forming the covering layer of the amplification optical fiber 30 is an ultraviolet curable resin different from the resin forming the outer cladding. The amplification optical fiber is a single-mode fiber, but may be configured to have the diameter of the core equal to that of a multi-mode fiber and to propagate single-mode light such that the signal light having a large power is propagated through the core of the amplification optical fiber. In addition, when being used regardless of beam quality of the light propagated through the core, the amplification optical fiber 30 may be a multi-mode fiber.

The first optical fiber 41 has the same configuration as the amplification optical fiber 30 except that the active element is not doped into the core. The first optical fiber 41 is connected to one end of the amplification optical fiber 30 such that a central axis of a core is aligned with a central axis of the core of the amplification optical fiber 30. Therefore, the core of the amplification optical fiber 30 is optically coupled to the core of the first optical fiber 41, and the inner cladding of the amplification optical fiber 30 is optically coupled to the inner cladding of the first optical fiber 41.

In addition, the first FBG 45 is provided in the core of the first optical fiber 41. In this way, the first FBG 45 is provided at one end of the amplification optical fiber 30. The first FBG 45 is configured such that portions with a high refractive index are repeated in a predetermined cycle along a longitudinal direction of the first optical fiber 41. By adjustment of this cycle, the first FBG 45 reflects light having a specific wavelength in the light emitted from the pumped active element of the amplification optical fiber 30. As described above, when the active element doped into the amplification optical fiber 30 is ytterbium, the first FBG 45 reflects light having, for example, a wavelength of 1070 nm at reflectance of 99% or more, for example.

Furthermore, in the combiner 50, the core of the pumping fiber 15 is connected to the inner cladding of the first optical fiber 41. In this way, the pumping fiber 15 connected to the pumping light source 10 and the amplification optical fiber 30 are optically coupled to each other through the first optical fiber 41.

Further, in the combiner 50, an optical fiber 52 is connected to the first optical fiber 41. For example, the optical fiber 52 is an optical fiber having a core of the same diameter as the core of the first optical fiber 41. The core of the optical fiber 52 is connected to the core of the first optical fiber 41.

The second optical fiber 42 is configured to include a core similar to the core of the amplification optical fiber 30 except that an active element is not doped, a cladding similar to the inner cladding of the amplification optical fiber 30 to closely surround the outer peripheral surface of the core, and a covering layer that covers the outer peripheral surface of the cladding. The second optical fiber 42 is connected to the other end of the amplification optical fiber 30 such that an axis thereof is aligned with the axis of the amplification optical fiber 30. Therefore, the core of the amplification optical fiber 30 is optically coupled to the core of the second optical fiber 42.

In addition, the second FBG 46 is provided in the core of the second optical fiber 42. In this way, the second FBG 46 is provided at the other end of the amplification optical fiber 30. The second FBG 46 is configured such that portions with a high refractive index are repeated in a predetermined cycle along a longitudinal direction of the second optical fiber 42 and light having at least a part of a wavelength of the light reflected by the first FBG 45 is reflected at reflectance lower than that of the first FBG 45. For example, the second FBG 46 is configured to reflect light having the same wavelength as the light reflected by the first FBG 45 at reflectance of 50%.

In addition, the delivery fiber 51 is connected to a side opposite to the amplification optical fiber 30 side of the second optical fiber 42. The delivery fiber 51 is fusion-spliced to the second optical fiber 42 by a connection portion 47.

The light receiving portion 61 is optically connected to a side opposite to the combiner 50 side of the optical fiber 52. The light receiving portion 61 has a configuration in which light receiving sensitivity with respect to a wavelength component of stimulated Raman scattering light generated from signal light is higher than light receiving sensitivity with respect to the wavelength component of the signal light. That is, the light receiving portion 61 can detect power of the wavelength component of the stimulated Raman scattering light in preference to power of the wavelength component of the signal light. Accordingly, the light receiving portion 61 is referred to as a detector 71 in this embodiment that detects the power of the wavelength component of the stimulated Raman scattering light generated from the signal light propagated through the amplification optical fiber 30 or the signal light emitted from the amplification optical fiber 30 in preference to the power of the wavelength component of the signal light. An example of the light receiving portion 61 is a photodiode in which the light receiving sensitivity with respect to the wavelength component of the stimulated Raman scattering light is higher than the light receiving sensitivity with respect to the wavelength component of the signal light. A signal related to power of the light detected by the light receiving portion 61 is output from the light receiving portion 61. The detector 71 may include an AD converter or the like as necessary when the signal output from the light receiving portion 61 is an analog signal.

The controller 80 is electrically connected to the detector 71 (light receiving portion 61), and thus the signal is input to the controller 80 from the detector 71. The controller 80 is configured to include a Central Processing Unit (CPU), for example. The controller 80 is configured to control the pumping light source 10.

An operation of the fiber laser device 1 will be described below.

First, the controller 80 controls the pumping light source 10, and the pumping light is emitted from each of the laser diodes 11 of the pumping light source 10. The pumping light emitted from the pumping light source 10 is incident on the inner cladding of the amplification optical fiber 30 through the inner cladding of the first optical fiber 41 from the pumping fiber 15. The pumping light incident on the inner cladding of the amplification optical fiber 30 is mainly propagated through the inner cladding, and thus pumps the active element doped into the core when passing through the core of the amplification optical fiber 30. The pumped active element state emits spontaneous emission light having a specific wavelength. The spontaneous emission light is propagated through the core of the amplification optical fiber 30, some of wavelength light are reflected by the first FBG 45, wavelength light to be reflected by the second FBG 46 in the reflected light is reflected by the second FBG 46 and reciprocates in a resonator (between the first FBG 45 and the second FBG 46). The reciprocating light is the signal light. The signal light is amplified by stimulated emission when being propagated through the core of the amplification optical fiber 30, and thus is in a laser oscillating state. With such a laser oscillating state, since energy of the active element being in the pumped state is used for the stimulated emission, Amplified Spontaneous Emission (ASE) hardly occurs. Then, some of the amplified light are transmitted through the second FBG 46, is incident on the delivery fiber 51 from the second optical fiber 42 as emission light, and is emitted from the end of the delivery fiber 51.

The emission light is irradiated onto a workpiece or the like, and the workpiece is machined. At this time, some of the emission light to be irradiated onto the workpiece is reflected and is then incident on the delivery fiber 51 in some cases. Some of the reflected light being incident on the delivery fiber 51 is incident again on the amplification optical fiber 30 through the second optical fiber 42. Since the reflected light being incident on the amplification optical fiber 30 has the same wavelength as the signal light, the reflected light is amplified again as signal light by the amplification optical fiber 30.

When the signal light is amplified by the amplification optical fiber 30 in this way, a power density of the light becomes high at the amplification optical fiber 30, the second optical fiber 42, the delivery fiber 51, and the like, there is a case where stimulated Raman scattering light is generated from the amplified signal light. As described above, when the reflected light is amplified again as the signal light, the power density of the signal light becomes higher, and the stimulated Raman scattering light is easily generated. FIG. 2 is a diagram illustrating a relation between the power of the signal light and the power of the stimulated Raman scattering light generated from the signal light. As illustrated in FIG. 2, as the power of the signal light increases, the power of the stimulated Raman scattering light exponentially increases. That is, as the power of the signal light increases, the rate of increase in the power of the stimulated Raman scattering light increases. Some of the stimulated Raman scattering light generated in this way transmit and emit through the second FBG 46 together with the signal light, and at least others of the stimulated Raman scattering light transmit through the first FBG 45.

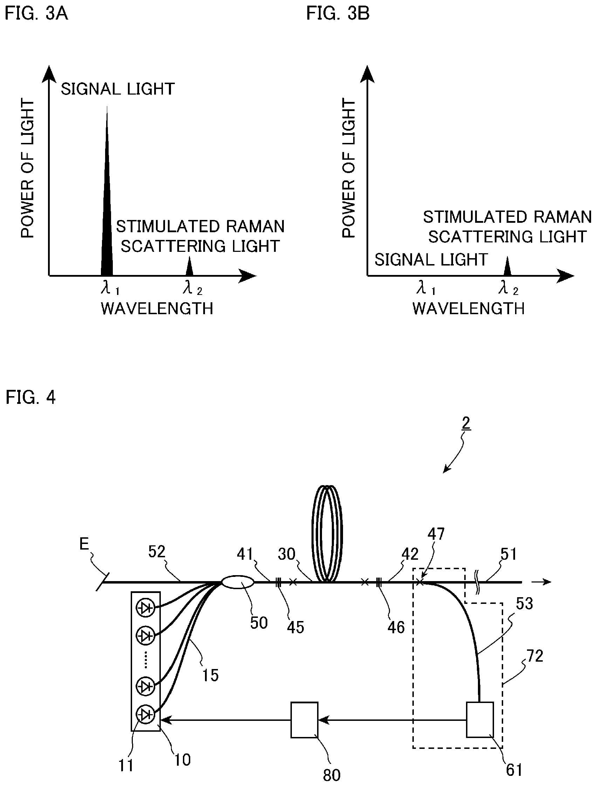

FIGS. 3A and 3B are diagrams for comparing the power of the signal light with the power of the stimulated Raman scattering light. FIG. 3A is a diagram for comparing the power of the signal light of the light transmitting through the second FBG 46 with the power of the stimulated Raman scattering light, and FIG. 3B is a diagram for comparing the power of the signal light of the light transmitting through the first FBG 45 with the power of the stimulated Raman scattering light. As illustrated in FIGS. 3A and 3B, assuming that a wavelength of the signal light is λ₁ and a wavelength of the stimulated Raman scattering light is λ₂, when the optical fiber is made of a quartz-based material, the relation of λ₂ = λ₁ + 50 nm is satisfied, and the wavelength of the stimulated Raman scattering light is larger than the wavelength of the signal light by 50 nm. In addition, since the amplified signal light is emitted from the second FBG 46 as described above, the power of the signal light becomes dominant in the light transmitting through the second FBG 46 as illustrated in FIG. 3A relative to the power of the stimulated Raman scattering light. Meanwhile, since the first FBG 45 reflects the signal light at high reflectance, the power of the stimulated Raman scattering light becomes dominant in the light transmitting through the first FBG 45 as illustrated in FIG. 3B relative to the power of the signal light. Although the power of the signal light looks like zero in FIG. 3B, it means that the power of the signal light is too small to be illustrated. In addition, the ASE hardly occurs in the laser oscillating state as described above. For this reason, even in consideration of light other than the signal light or the stimulated Raman scattering light, the power of the stimulated Raman scattering light out of the powers of the light transmitting through the first FBG 45 becomes dominant in the laser oscillating state.

Light having a large power ratio in the stimulated Raman scattering light transmitting through the first FBG 45 is received by the light receiving portion 61. As described above, the light receiving portion 61 has a configuration in which the light receiving sensitivity with respect to the wavelength component of the stimulated Raman scattering light generated from the signal light is higher than the light receiving sensitivity with respect to the wavelength component of the signal light, the detector 71 including the light receiving portion 61 preferentially detects the power of the wavelength component of the stimulated Raman scattering light. In addition, as described above, since the power ratio of the signal light in the light transmitting through the first FBG 45 is small, when the wavelength component of the stimulated Raman scattering light in the light incident on the light receiving portion 61 is considered as a signal to be detected and the wavelength component of the signal light is considered as noise which is not supposed to be detected, the detector 71 can detect the power of the wavelength component of the stimulated Raman scattering light in a good S/N condition. A signal indicating the power of the light detected by the detector 71 is input to the controller 80 from the detector 71.

The controller 80 controls the pumping light source 10 based on the magnitude of the power when the signal indicating the power of the light is input from the detector 71. For example, the controller 80 controls the pumping light source 10 such that the power of the pumping light becomes small when determining that the power of the light detected by the detector 71 is equal to or greater than a predetermined magnitude. As described above, since the power of the stimulated Raman scattering light depends on the power density of the signal light, the fact that the signal from the detector 71 is equal to or greater than the predetermined magnitude indicates that the power of the signal light is correspondingly large, the signal being obtained in such a manner that the power of the wavelength component of the stimulated Raman scattering light is preferentially detected. Accordingly, when the pumping light source 10 makes the power of the pumping light small as described above, an amplification factor of the signal light can be suppressed, and the power of the signal light can be suppressed even when the reflected light is incident again on the amplification optical fiber 30 and is amplified again as some of the signal light as described above. For this reason, it is possible to prevent unstable oscillation and damage of the pumping light source 10 due to incidence of unnecessary light on the pumping light source 10. The controller 80 may control again the pumping light source 10 after the point of time when the power of the light detected by the detector 71 is smaller than the predetermined magnitude to increase the power of the pumping light. That is, a feedback may be applied to the power of the pumping light using the power of the stimulated Raman scattering light, the signal light having a power as large as possible within the allowable range may be emitted.

The controller 80 may control the pumping light source 10 such that the pumping light emitted from the pumping light source 10 becomes zero when determining that the power of the light detected by the detector 71 is equal to or larger than the predetermined magnitude. In this case, the controller 80 may control again the pumping light source 10 after the point of time when the power of the light detected by the detector 71 is smaller than the predetermined magnitude to emit the pumping light. At this time, the controller 80 may control the pumping light source 10 to be smaller than the power of the pumping light before the power of the pumping light emitted from the pumping light source 10 becomes zero. Thus, it is possible to prevent the power of the stimulated Raman scattering light from not being larger than the predetermined magnitude, and the fiber laser device 1 can emit the signal light having the power as large as possible within the allowable range.

As described above, according to the fiber laser device 1 of this embodiment, the detector 71 detects the power of the wavelength component of the stimulated Raman scattering light in preference to that of the wavelength component of the signal light, and the controller 80 controls the pumping light source 10 based on the detection result, whereby the power of the pumping light is adjusted. As described above using FIG. 2, the power of the stimulated Raman scattering light exponentially increases with respect to the power of the signal light. Therefore, the power of the wavelength component of the stimulated Raman scattering light is detected in preference to the power of the wavelength component of the signal light, and the power of the pumping light is controlled based on the power, whereby the power of the pumping light can be finely adjusted in a region where the power of the amplified signal light is large. Accordingly, it is possible to control the emission light having the large power with high accuracy.

### (Second Example)

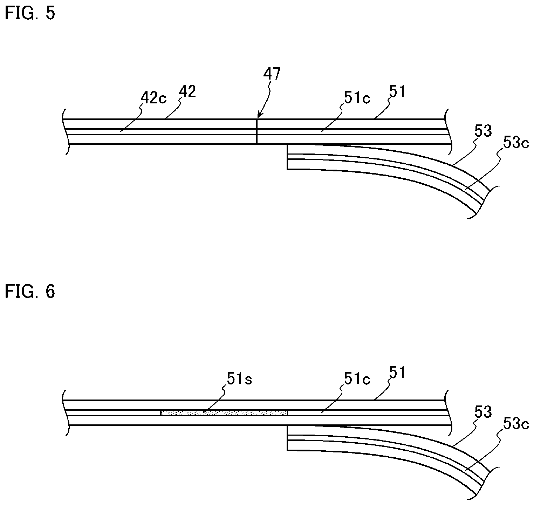

A second example useful for understanding the present invention will be described below in detail with reference to FIGS. 4 and 5. Components similar to and equivalent to the components of the first embodiment will be denoted by the same reference numerals unless otherwise specified, and the duplicated description will not be presented.

FIG. 4 is a diagram illustrating a fiber laser device. As illustrated in FIG. 4, a fiber laser device 2 differs from the fiber laser device 1 of the first embodiment in that a thermal conversion portion E is connected to a side opposite to a combiner 50 side of an optical fiber 52, an optical fiber 53 is provided so that one end thereof is disposed in the vicinity of a connection portion 47 between a second optical fiber 42 and a delivery fiber 51, and a light receiving portion 61 is connected to the optical fiber 53.

For example, the optical fiber 53 is an optical fiber similar to the optical fiber 52. FIG. 5 is an enlarged view of the vicinity of the connection portion 47 between the second optical fiber 42 and the delivery fiber 51. In FIG. 5, a covering layer of each optical fiber is not presented. Even when the optical fibers are connected to each other in an ideal state as much as possible, light leaks from a connection point. Accordingly, when light is incident on a core 51c of the delivery fiber 51 from a core 42c of the second optical fiber 42, light leaks from the connection portion 47. Therefore, as illustrated in FIG. 5, one end of the optical fiber 53 is disposed at the delivery fiber 51 in the vicinity of the connection portion 47 such that some of the light leaking from the connection portion 47 are incident on a core 53c of the optical fiber 53, and the optical fiber 53 is disposed such that the vicinity of the end is located along the delivery fiber 51. Therefore, in the fiber laser device 2 since the leakage light is used as branched light, the connection portion 47 functions as a light branch portion.

In addition, as described in the first embodiment, the light receiving portion 61 has a configuration in which light receiving sensitivity with respect to a wavelength component of stimulated Raman scattering light generated from signal light is higher than light receiving sensitivity with respect to the wavelength component of the signal light. Accordingly, a detector 72 includes the connection portion 47 serving as the light branch portion, the optical fiber 53, and the light receiving portion 61 to detect power of the wavelength component of the stimulated Raman scattering light generated from the signal light in preference to power of the wavelength component of the signal light. The detector 72 may include an AD converter or the like as necessary when the signal output from the light receiving portion 61 is an analog signal.

In the fiber laser device 2 having such a configuration, the signal light is amplified by an amplification optical fiber 30 in the same manner as in the fiber laser device 1 of the first embodiment, and the amplified signal light is emitted from the delivery fiber 51. By the way, the light incident on the delivery fiber 51 from the second optical fiber 42 includes the amplified signal light and the stimulated Raman scattering light as illustrated using FIGS. 3A and 3B. Therefore, the light incident on optical fiber 53 includes some of the signal light and some of the stimulated Raman scattering light. However, since the light receiving portion 61 has the configuration in which the light receiving sensitivity with respect to the wavelength component of the stimulated Raman scattering light generated from the signal light is higher than the light receiving sensitivity with respect to the wavelength component of the signal light as described above, a signal indicating the power of the wavelength component of the stimulated Raman scattering light which is preferentially detected is output from the detector 72.

When the signal indicating the power of the light detected by the detector 72 is input to a controller 80 from the light receiving portion 61, the controller 80 controls a pumping light source 10 in the same manner as in the fiber laser device 1 of the first embodiment.

Light transmitting through a first FBG 45 is incident on the thermal conversion portion E, thereby being converted into heat to disappear.

According to the fiber laser device 2 the detector 72 can preferentially detect the power of the wavelength component of the stimulated Raman scattering light without using a special part for separating the signal light and the stimulated Raman scattering light from each other. Therefore, the fiber laser device 2 can detect the power of the wavelength component of the stimulated Raman scattering light with a simple configuration.

In this example, although the connection point between the second optical fiber 42 and the delivery fiber 51 is used as a light branch portion, for example, a connection point between the amplification optical fiber 30 and the first optical fiber 41 may be used as a light branch portion, or a connection point between the amplification optical fiber 30 and the second optical fiber 42 may be used as a light branch portion. Alternatively, a coupler is formed in the middle of any of the optical fibers for propagating the signal light, and thus the light may be branched. However, as the number of the couplers becomes smaller, the loss of the signal light is reduced and the light having large power can be efficiently emitted, whereby it is preferable to use the connection portion between the optical fibers as described above.

Furthermore, a light scattering portion is formed in the optical fiber that propagates the signal light, and the light scattering portion may be used as the light branch portion. FIG. 6 is a diagram illustrating a state of using a light scattering portion formed in the core 51c of the delivery fiber 51 as a light branch portion. In FIG. 6, a covering layer of each optical fiber is not presented. As illustrated in FIG. 6, a light scattering portion 51s is provided in a part of the core 51c of the delivery fiber 51 in this embodiment. Some of the light propagated through the core 51c are scattered in the light scattering portion 51s and leak outside the delivery fiber 51. For example, such a light scattering portion 51s can be formed by irradiation of ultraviolet light onto a formation position of the light scattering portion 51s when germanium is doped into the core 51c of the delivery fiber 51. Then, one end of the optical fiber 53 is disposed at an emitting end side of the delivery fiber 51 in the vicinity of the light scattering portion 51s such that some of the light leaking from the light scattering portion 51s is incident on the core 53c of the optical fiber 53, and the optical fiber 53 is disposed such that the vicinity of the end is located along the delivery fiber 51. According to such a configuration, the light scattering portion 51s functions as a light branch portion, and some of the branched light are propagated through the optical fiber 53 and are received by the light receiving portion 61 in the same manner as in the above embodiment. In this embodiment, although the light scattering portion 51s is provided in the core 51c of the delivery fiber 51, the light scattering portion may be provided in the core of another optical fiber such as the second optical fiber 42 as long as the core of the optical fiber propagates the signal light.

Furthermore, although this example is configured such that the light leaking from the connection portion 47 or the light scattering portion 51s is incident on the light receiving portion 61 through the optical fiber 53, but may be configured such that the light receiving portion 61 is disposed adjacent to the connection portion 47 or the light scattering portion 51s and the light leaking from the connection portion 47 or the light scattering portion 51s is directly incident on the light receiving portion 61 without passing through the optical fiber 53.

### (Third Example)

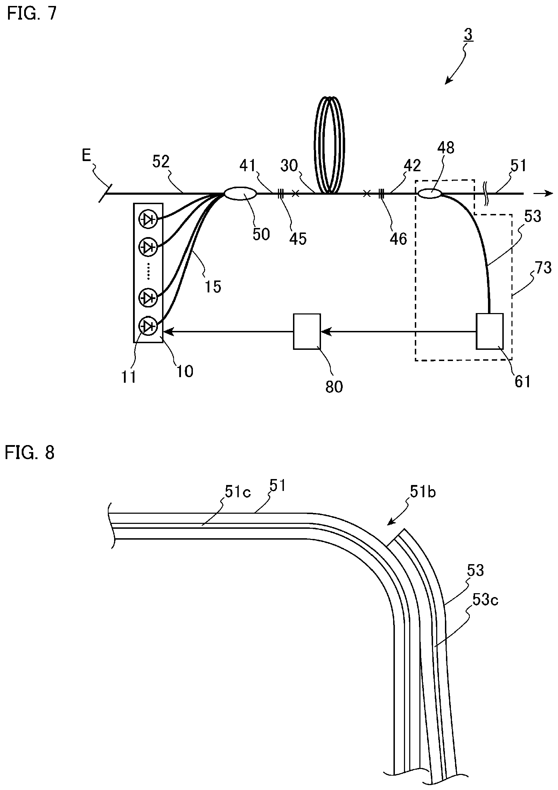

A third example will be described below in detail with reference to FIG. 7. Components similar to and equivalent to the components of the second example will be denoted by the same reference numerals unless otherwise specified, and the duplicated description will not be presented.

FIG. 7 is a diagram illustrating a fiber laser device according to the third example. As illustrated in FIG. 7, a fiber laser device 3 differs from the fiber laser device 2 of the second example in that a coupler 48 is provided instead of the connection portion 47 in the second example.

The coupler 48 is a light branch portion that transmits a wavelength component of signal light propagated through an optical fiber 42 to a delivery fiber 51 and branches a wavelength component of stimulated Raman scattering light generated from the signal light. For example, such a coupler 48 has a configuration in which a delivery fiber 51 and an optical fiber 53 extend and are fusion-spliced along each other in the vicinity of an end of the delivery fiber 51 which is connected to the second optical fiber 42. By adjustment of the length of which the delivery fiber 51 and the optical fiber 53 are fusion-spliced along each other, the coupler 48 has a configuration in which the signal light transmits and the wavelength component of the stimulated Raman scattering light is branched as described above.

In this example, a detector 73 includes the coupler 48 serving as the above light branch portion, the optical fiber 53, and the light receiving portion 61 to detect a power of the wavelength component of the stimulated Raman scattering light generated from the signal light in preference to a power of the wavelength component of the signal light. The detector 73 may include an AD converter or the like as necessary when the signal output from the light receiving portion 61 is an analog signal.

In such a fiber laser device 3, the signal light is amplified by an amplification optical fiber 30 in the same manner as in the fiber laser device 2 of the second embodiment, and the amplified signal light is emitted from the delivery fiber 51. At this time, when the stimulated Raman scattering light is generated from the signal light, the wavelength component of the stimulated Raman scattering light is branched in the coupler 48, and the wavelength component of the stimulated Raman scattering light is incident on the optical fiber 53. Therefore, out of the powers of the light propagated through the optical fiber 53, the power of the wavelength component of the stimulated Raman scattering light becomes dominant. The light incident on the optical fiber 53 is received by a light receiving portion 61, and the light receiving portion 61 detects the power of the wavelength component of the stimulated Raman scattering light in preference to the power of the wavelength component of the signal light. Moreover, as described in the first embodiment, the light receiving portion 61 has a configuration in which light receiving sensitivity with respect to the wavelength component of the stimulated Raman scattering light generated from the signal light is higher than light receiving sensitivity with respect to the wavelength component of the signal light. Accordingly, even when the wavelength component of the signal light is propagated through the optical fiber 53 as noise, the light receiving portion 61 can detect the power of the wavelength component of the stimulated Raman scattering light with high accuracy compared to a case of using the light receiving portion in which the light receiving sensitivity of the wavelength component of the signal light is equal to the light receiving sensitivity of the wavelength component of the stimulated Raman scattering light. In addition, since the wavelength component of the stimulated Raman scattering light is branched by the coupler 48, when the wavelength component of the stimulated Raman scattering light in the light incident on the light receiving portion 61 is considered as a signal to be detected and the wavelength component of the signal light is considered as noise which is not supposed to be detected, the detector 73 can detect the power of the wavelength component of the stimulated Raman scattering light in a good S/N condition even when the same light receiving portion 61 as in the second embodiment is used, as compared to the detector 72 of the fiber laser device 2 of the second example.

When the signal indicating the power of the light detected by the detector 73 is input to a controller 80 from the light receiving portion 61, the controller 80 controls a pumping light source 10 in the same manner as in the fiber laser device 2 of the second example.

According to the fiber laser device 3 of this example, the coupler 48 was used as a light branch portion, which was obtained by integral fusion splicing, in a longitudinal direction, of a part of the delivery fiber 51 through which the signal light is propagated and a part of the optical fiber 53 through which the branched stimulated Raman scattering light is propagated. Such a coupler can branch the wavelength component of the stimulated Raman scattering light and propagate it to the light receiving portion 61 in a state where the loss of the wavelength component of the stimulated Raman scattering light is reduced. For this reason, the power of the wavelength component of the stimulated Raman scattering light can be easily detected.

In this example, although the coupler 48 is formed at a connection portion between the second optical fiber 42 and the delivery fiber 51, the coupler 48 may be provided at another place as long as the optical fiber propagates the signal light. Furthermore, in this example, although the light receiving portion 61 is used as a light receiving portion in which the light receiving sensitivity with respect to the wavelength component of the stimulated Raman scattering light is higher than the light receiving sensitivity with respect to the wavelength component of the signal light, since the wavelength component of the stimulated Raman scattering light is separated in the coupler 48, even in the case of using the light receiving portion, in which the light receiving sensitivity of the wavelength component of the signal light is equal to the light receiving sensitivity of the wavelength component of the stimulated Raman scattering light, instead of the light receiving portion 61, the detector 73 can detect the power of the wavelength component of the stimulated Raman scattering light in preference to the power of the wavelength component of the signal light. However, the case of using the light receiving portion 61 is preferable that the power of the wavelength component of the stimulated Raman scattering light can be detected with high accuracy even when the wavelength component of the signal light is incident on the optical fiber 53 as noise, as described above.

Furthermore, in this example, although the coupler 48 is used as a branch portion that braches the wavelength component of the stimulated Raman scattering light in preference to the wavelength component of the signal light, such a light branch portion is not limited to the coupler 48. FIG. 8 is a diagram illustrating a state where a bending portion of the delivery fiber 51 is used as a light branch portion. In FIG. 8, a covering layer of each optical fiber is not presented. When a relative refractive index difference between a core and a cladding of the optical fiber and a bending radius of the optical fiber are determined, respectively, a wavelength of light leaking from the bending portion is approximately determined. For example, as described in the first embodiment, when the wavelength of the signal light is about 1070 nm and the wavelength of the stimulated Raman scattering light is 1120 nm, the relative refractive index between the core and the cladding is 0.1%, and when the bending radius of the optical fiber propagating the signal light and the stimulated Raman scattering light is 40 mm, the wavelength component of the stimulated Raman scattering light leaks in preference to the wavelength component of the signal light. Therefore, as illustrated in FIG. 8, the delivery fiber 51 is bent with the bending radius such that the wavelength component of the stimulated Raman scattering light leaks in preference to the wavelength component of the signal light, thereby forming a bending portion 51b. Then, one end of the optical fiber 53 is disposed in the vicinity of the bending portion 51b such that some of the light leaking from the bending portion 51b is incident on a core 53c of the optical fiber 53, and the optical fiber 53 is disposed such that the vicinity of the end is located along the delivery fiber 51. According to such a configuration, the bending portion 51b functions as a light branch portion, and the wavelength component of the stimulated Raman scattering light to be branched in preference to the wavelength component of the signal light is propagated through the optical fiber 53 and is received by the light receiving portion 61 in the same manner as in the above embodiment. In this example, although the bending portion 51b is provided at the delivery fiber 51, the bending portion may be provided at another optical fiber such as the second optical fiber 42 as long as the optical fiber propagates the signal light.

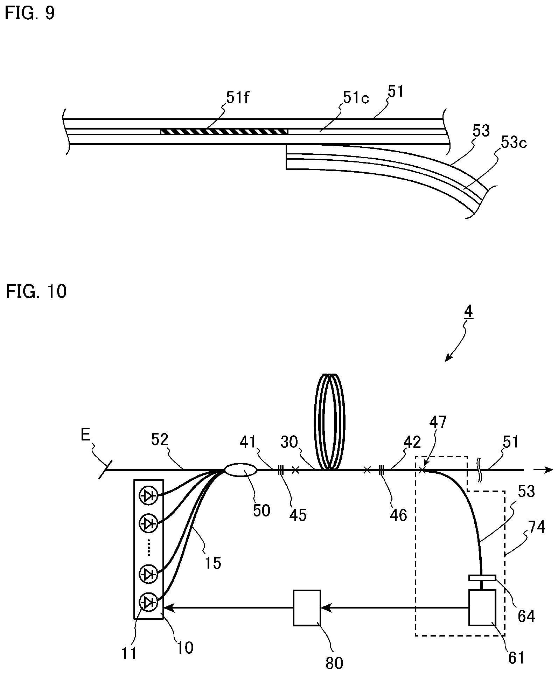

Alternatively, a slant FBG can be also used as a branch portion that branches the wavelength component of the stimulated Raman scattering light in preference to the wavelength component of the signal light. FIG. 9 is a diagram illustrating a state where the slant FBG is used as a light branch portion. In FIG. 9, a covering layer of each optical fiber is not presented. As illustrated in FIG. 9, in this example, a slant FBG 51f is provided at a part of the core 51c of the delivery fiber 51. The slant FBG 51f has a configuration in which portions with a high refractive index are repeated in a predetermined cycle along a longitudinal direction of the delivery fiber 51 and the high refractive index portion and a low refractive index portion are inclined with respect to a plane vertical to the longitudinal direction of the delivery fiber 51. By adjustment of this cycle, the slant FBG 51f transmits the wavelength component of the signal light and reflects the wavelength component of the stimulated Raman scattering light out of the delivery fiber 51. Then, one end of the optical fiber 53 is disposed at an emitting end side of the delivery fiber 51 in the vicinity of the slant FBG 51f such that some of the light reflected by the slant FBG 51f is incident on the core 53c of the optical fiber 53, and the optical fiber 53 is disposed such that the vicinity of the end is located along the delivery fiber 51. According to such a configuration, the slant FBG 51f functions as a light branch portion, and the wavelength component of the stimulated Raman scattering light to be branched in preference to the wavelength component of the signal light is propagated through the optical fiber 53 and are received by the light receiving portion 61 in the same manner as in the above embodiment. In this embodiment, although the slant FBG 51fs is provided in the core 51c of the delivery fiber 51, the slant FBG may be provided in the core of another optical fiber such as the second optical fiber 42 as long as the core of the optical fiber propagates the signal light.

When the bending portion 51b or the slant FBG 51f is a branch portion, this embodiment may have a configuration in which the light receiving portion 61 is disposed adjacent to the bending portion 51b or the slant FBG 51f and the light leaking from the bending portion 51b or the slant FBG 51f is directly incident on the light receiving portion 61 without passing through the optical fiber 53, instead of having the configuration in which the light leaking from the bending portion 51b or the slant FBG 51f is incident on the light receiving portion 61 through the optical fiber 53.

When the bending portion 51b or the slant FBG 51f is a light branch portion, the fiber laser device 3 preferentially branches the wavelength component of the stimulated Raman scattering light, and thus can suppress the loss of the signal light.

### (Fourth Example)

A fourth example will be described below in detail with reference to FIG. 10. Components similar to and equivalent to the components of the second example will be denoted by the same reference numerals unless otherwise specified, and the duplicated description will not be presented.

FIG. 10 is a diagram illustrating a fiber laser device according to the third example. As illustrated in FIG. 10, a fiber laser device 4 differs from the fiber laser device 2 of the second example in that an optical filter 64 is provided in the middle of an optical fiber 53.

The optical filter 64 is configured not to transmit a wavelength component of signal light but to a wavelength component of stimulated Raman scattering light generated from the signal light. For example, such an optical filter 64 is formed from a laminate of oxide films. In this example, a detector 74 includes a connection portion 47 serving as a light branch portion, an optical fiber 53, the optical filter 64, and a light receiving portion 61 to detect a power of the wavelength component of the stimulated Raman scattering light generated from the signal light in preference to a power of the wavelength component of the signal light. The detector 74 may include an AD converter or the like as necessary when the signal output from the light receiving portion 61 is an analog signal.

In such a fiber laser device 4, the signal light is amplified by an amplification optical fiber 30 in the same manner as in the fiber laser device 2 of the second embodiment, and the amplified signal light is emitted from the delivery fiber 51. At this time, as described in the second example, the signal light and the stimulated Raman scattering light are incident on the optical fiber 53. However, the wavelength component of the stimulated Raman scattering light is incident on the light receiving portion 61 through the optical filter 64 in preference to the wavelength component of the signal light. Accordingly, the light receiving portion 61 detects the power of the wavelength component of the stimulated Raman scattering light in preference to the power of the wavelength component of the signal light. Moreover, as described in the first embodiment, the light receiving portion 61 has a configuration in which light receiving sensitivity with respect to the wavelength component of the stimulated Raman scattering light generated from the signal light is higher than light receiving sensitivity with respect to the wavelength component of the signal light. Therefore, even when the signal light is transmitted through the optical filter 64 as noise, the light receiving portion 61 can detect the power of the wavelength component of the stimulated Raman scattering light with high accuracy compared to a case where the light receiving portion is used as a light receiving portion in which the light receiving sensitivity of the wavelength component of the signal light is equal to the light receiving sensitivity of the wavelength component of the stimulated Raman scattering light. In addition, since the optical filter 64 is configured not to transmit the wavelength component of the signal light but to transmit the wavelength component of the stimulated Raman scattering light, when the wavelength component of the stimulated Raman scattering light in the light incident on the light receiving portion 61 is considered as a signal to be detected and the wavelength component of the signal light is considered as noise which is not supposed to be detected, the detector 74 can detect the power of the wavelength component of the stimulated Raman scattering light in a good S/N condition even when the same light receiving portion 61 as in the second example is used, compared to the detector 72 of the fiber laser device 2 of the second example.

When the signal indicating the power of the light detected by the detector 74 is input to a controller 80 from the light receiving portion 61, the controller 80 controls a pumping light source 10 in the same manner as in the fiber laser device 2 of the second example.

The optical filter is excellent in controllability of the wavelength of the transmitted light. Therefore, by setting of the wavelength of the light transmitting through the optical filter 64, it is possible to freely set a control of S/N when the wavelength component of the stimulated Raman scattering light is defined as a signal to be received by the light receiving portion and another light is defined as noise. In particular, when the optical filter 64 is configured to transmit only the stimulated Raman scattering light, the S/N can also become the best condition.

In this example, similarly to the fiber laser device of the second example, a connection point between different optical fibers may be used as a light branch portion or a coupler is formed in the middle of any of the optical fibers for propagating the signal light, whereby the light may be branched.

Furthermore, this example has the configuration in which the optical filter 64 is provided in the middle of the optical fiber 53, but may have a configuration in which the light leaking from the connection portion 47 is directly incident on the optical filter 64 without passing through the optical fiber 53 and thus the light emitted from the optical filter 64 is incident on the light receiving portion 61. In addition, the optical filter may have another configuration as long as the optical filter transmits the wavelength component of the stimulated Raman scattering light in preference to the wavelength component of the signal light.

In the same manner as in the third example, even in the case of using the light receiving portion, in which the light receiving sensitivity of the wavelength component of the signal light is equal to the light receiving sensitivity of the wavelength component of the stimulated Raman scattering light, instead of the light receiving portion 61, since the optical filter 64 is configured not to transmit the signal light but to the stimulated Raman scattering light, the detector 74 can detect the power of the wavelength component of the stimulated Raman scattering light in preference to the power of the wavelength component of the signal light. However, the case of using the light receiving portion 61 is preferable that the power of the wavelength component of the stimulated Raman scattering light can be detected with high accuracy even when the wavelength component of the signal light is transmitted through the optical filter 64 as noise, as described above.

### (Fifth Example)

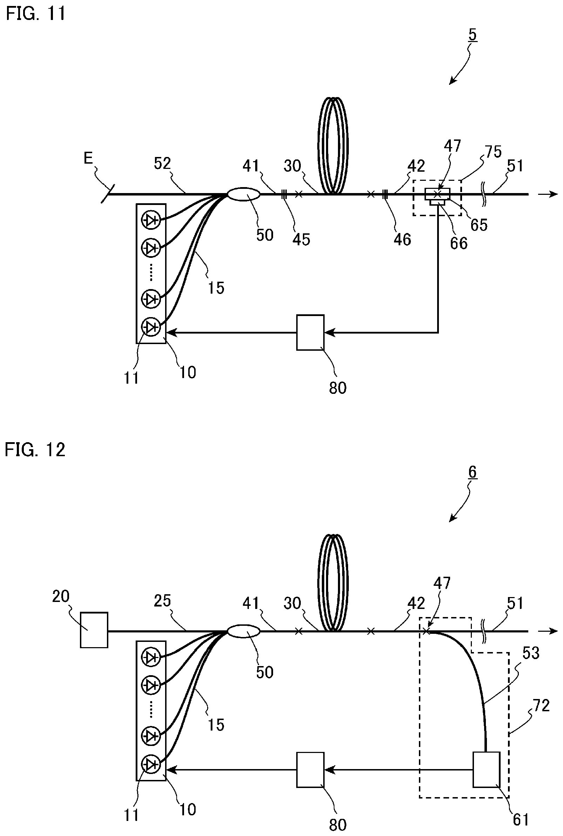

A fifth example of the present invention will be described below in detail with reference to FIG. 11. Components similar to and equivalent to the components of the second example will be denoted by the same reference numerals unless otherwise specified, and the duplicated description will not be presented.

FIG. 11 is a diagram illustrating a fiber laser device according to a fifth example useful for understanding of the present invention. As illustrated in FIG. 11, a fiber laser device 5 differs from the fiber laser device 2 of the second example in that an optical fiber 53 and a light receiving portion 61 are not provided, a connection portion 47 is covered with a resin 65, and a temperature detector 66 is provided to detect a temperature of the resin 65.

The resin 65 is a resin that transmits a wavelength component of signal light and absorbs a wavelength component of stimulated Raman scattering light. An example of the resin having these properties includes a silicon resin. For example, when the wavelength of the signal light 1070 nm, since the wavelength of the stimulated Raman scattering light is about 1120 nm from the description with reference to FIGS. 3A and 3B, a silicon resin of OE6520 (trade name) produced by Dow Corning Toray Co., Ltd. can be used, for example.

As the temperature detector 66, for example, a digital thermometer or a thermistor can be used.

In this example, a detector 75 includes a connection portion 47 serving as a light branch portion, the resin 65 that is used as a photothermal conversion portion for absorbing some of light emitted from an amplification optical fiber and converting the absorbed light into heat, and the temperature detector 66 that detects the photothermal conversion portion to detect a power of a wavelength component of stimulated Raman scattering light generated from signal light in preference to a power of a wavelength component of the signal light. The detector 75 may include an AD converter or the like as necessary when the signal output from the temperature detector 66 is an analog signal.

In such a fiber laser device 5, the signal light is amplified by an amplification optical fiber 30 in the same manner as in the fiber laser device 2 of the second example, and the amplified signal light is emitted from the delivery fiber. At this time, among the light leaking from the connection portion 47, the wavelength component of the signal light is transmitted through the resin 65 and the wavelength component of the stimulated Raman scattering light is absorbed into the resin 65. A temperature of the resin, into which the wavelength component of the stimulated Raman scattering light is absorbed, is detected by the temperature detector 66. In this way, the power of the wavelength component of the stimulated Raman scattering light is detected as a temperature.

When the signal indicating the power of the light detected by the detector 75 is input to a controller 80 from the temperature detector 66, and the signal is input to the controller 80 from the temperature detector 66, the controller 80 controls a pumping light source 10 in the same manner as in the fiber laser device 2 of the second example.

According to the fiber laser device 5 it is possible to detect the power of the wavelength component of the stimulated Raman scattering light without using a light receiving portion. Accordingly, the fiber laser device can have a simple configuration.

In the fiber laser device 5 the resin 65 was provided to cover a connection portion 47. However, the resin 65 may be provided on light covering another connection portion through which the signal light is propagated. Alternatively, in accordance with the invention the resin 65 may be provided to cover an end of an optical fiber 52 instead of the thermal conversion portion E. In addition, a covering layer of the optical fiber for propagating the signal light includes the same resin as the resin 65, and the covering layer may be used as the photothermal conversion portion. Furthermore, the resin 65 is used as the photothermal conversion portion, but the photothermal conversion portion may be formed using other materials without being limited to the resin, as long as absorption efficiency of the wavelength component of the stimulated Raman scattering light is higher than that of the wavelength component of the signal light.

### (Sixth Example)

A sixth example not in accordance with the present invention will be described below in detail with reference to FIG. 12. Components similar to and equivalent to the components of the second example will be denoted by the same reference numerals unless otherwise specified, and the duplicated description will not be presented.

FIG. 12 is a diagram illustrating a fiber laser device. As illustrated in FIG. 12, a fiber laser device 6 differs from the fiber laser device 2 of the second example in that a first FBG 45 and a second FBG 46 are not provided at a first optical fiber 41 and a second optical fiber 42 and an optical fiber 25 is disposed instead of the optical fiber 52, whereby a signal light source 20 is connected to a side opposite to a combiner 50 side of the optical fiber 25. The fiber laser device 6 is a so-called MO-PA fiber laser device.

The signal light source 20 includes, for example a laser diode or a fiber laser and emits signal light. The signal light source is usually referred to as a seed light source, and the signal light is usually referred to as seed light. The signal light source 20 is configured to emit signal light having, for example, a wavelength of 1070 nm when an active element to be doped into a core of an amplification optical fiber 30 is ytterbium, for example. The signal light emitted from the signal light source 20 is propagated through a core of the optical fiber 25. An example of the optical fiber 25 is a single-mode fiber, and, in this case, the signal light is propagated through the optical fiber 25 as single-mode light.

In the combiner 50 of this example, the core of the optical fiber 25 is connected to a core of the first optical fiber 41. Accordingly, the signal light emitted from the signal light source 20 is incident to the core of the amplification optical fiber 30 through the core of the first optical fiber 41, and pumping light emitted from a pumping light source 10 in the same manner as in the second embodiment is incident on an inner cladding of the amplification optical fiber 30 through an inner cladding of the first optical fiber 41.

In the fiber laser device 6 first, pumping light is emitted from each of laser diodes 11 of the pumping light source 10 by a command from a controller 80. The pumping light emitted from each of the laser diodes 11 of the pumping light source 10 is incident on the inner cladding of the amplification optical fiber 30 as described above and pumps an active element doped into the core while being propagated through the amplification optical fiber 30.

Then, the signal light is emitted from the signal light source 20 at a predetermined timing, and is incident on the core of the amplification optical fiber 30 as described above, whereby the signal light is propagated through the core. At this time, the signal light is amplified by stimulated emission of the active element being in the pumped state, and the amplified signal light is emitted from the amplification optical fiber 30. When pulse-like signal light is emitted from the signal light source 20, amplified pulse-like signal light is emitted. In this case, light having a large peak power is emitted compared to a case where continuous signal light is emitted from the signal light source 20. Even in the fiber laser device 6 the signal light has a large amplification factor, and the stimulated Raman scattering light tends to be generated from the signal light when the power density of the signal light is high.

The amplified signal light emitted from the amplification optical fiber 30 is incident on a delivery fiber through the second optical fiber 42 and is emitted from the delivery fiber. At this time, light leaks from a connection portion 47 between the second optical fiber 42 and the delivery fiber 51, and a power of the wavelength component of the stimulated Raman scattering light is detected by the detector 72 in the same manner as in the second example. Thereafter, the controller 80 controls the pumping light source 10 in the same manner as in the fiber laser device 2 of the second example.

Even in the MO-PA fiber laser device such as the fiber laser device 6 the power of the wavelength component of the stimulated Raman scattering light is detected in preference to the power of the wavelength component of the signal light, whereby the power of the pumping light can be finely adjusted in a region where the power of the emission light is large. Accordingly, it is possible to control the power of the emission light with high accuracy.

In the fiber laser device 6 the configuration of the detector was similar to that of the detector 72 of the fiber laser device 2 of the second example. However, the fiber laser device of this example may also have a detector of the same configuration as the detectors 73, 74, and 75 according to the third to fifth examples.

In addition, the first optical fiber 41 may not be presented, and thus, in the combiner 50, the core of the pumping fiber 15 may be connected to the cladding of the amplification optical fiber 30 and the core of the optical fiber 25 may be connected to the core of the amplification optical fiber 30. Furthermore, the second optical fiber 42 may not be presented, and thus the amplification optical fiber 30 and the delivery fiber 51 are directly connected to each other.

Although embodiments of the present invention are described above, the present invention can be appropriately changed without being limited to these embodiments.

For example, although the light transmitted through the first FBG 45 is directly received by the light receiving portion 61 in the fiber laser device 1 of the first embodiment, the present invention is not limited thereto. For example, when the power of the light transmitted through the first FBG is large, an attenuator may be provided in the middle of the optical fiber 52 to attenuate the power of the light. In addition, in accordance with the present invention the optical fiber 52 of the fiber laser device 1 according to the first embodiment may be provided with the detectors 72 to 76 according to the second to sixth examples to detect the light propagated through the optical fiber 52 using these detectors.

Further, although the first FBG 45 or the second FBG 46 is described as the first mirror or the second mirror in the above embodiments, the first mirror or the second mirror may have another configuration.

According to the present invention, the fiber laser device capable of controlling the emission light having the large power with high accuracy is provided, and is available to various industries such as a laser machining field or a medical field.

### Reference Signs List

- 1 to 6 ...: fiber laser device
- 10 ...: pumping light source
- 20 ...: signal light source
- 30 ...: amplification optical fiber
- 45 ...: first FBG (first mirror)
- 46 ...: second FBG (second mirror)
- 47 ...: connection portion
- 48 ...: coupler
- 50 ...: combiner
- 51 ...: delivery fiber
- 61 ...: light receiving portion
- 64 ...: optical filter
- 65 ...: resin (photothermal conversion portion)
- 66 ...: temperature detector
- 71 to 75 ...: detector
- 80 ...: controller

## Claims

1. A fiber laser device (1) comprising:
a pumping light source (10) that emits pumping light;
an amplification optical fiber (30) doped with an active element that amplifies and emits signal laser light when pumped by the pumping light;
a first mirror (45) that is provided at one side of the amplification optical fiber (30) to reflect the signal light;
a second mirror (46) that is provided at the other side of the amplification optical fiber (30) to reflect the signal light at reflectance lower than that of the first mirror (45); wherein the amplification optical fiber, the first mirror and the second mirror form a laser resonator for the signal laser light;
a detector (71) that detects a power of a wavelength component of stimulated Raman scattering light generated from the signal light amplified by the amplification optical fiber (30) in preference to a power of a wavelength component of the signal light; and
a controller (80) that controls a power of the pumping light based on the power of the stimulated Raman scattering light detected by the detector (71); wherein
the detector (71) is connected to an optical fiber (52) such that the detector (71) and the optical fiber (52) are located on one side of the first mirror (45) and the amplification optical fiber (30) is located on the other side of the first mirror (45), whereby the optical fiber (52) transmits light emitted through the first mirror (45) to the detector (71).

2. The fiber laser device (1) according to claim 1, wherein the detector (71) includes a light receiving portion (61) that receives light transmitted through the first mirror (45), and
the light receiving portion (61) has light receiving sensitivity with respect to the wavelength component of the stimulated Raman scattering light higher than light receiving sensitivity with respect to the wavelength component of the signal light.

3. The fiber laser device (1) according to claim 1, further comprising a delivery fiber (51) that receives signal laser light transmitted out of the laser resonator through the second mirror (46).

4. The fiber laser device (1) according to any one of claims 1 and 3, wherein the detector includes:
a light branch portion (47) that branches some of the light emitted from the amplification optical fiber (30); and
a light receiving portion (61) that receives the branched light, and
the light receiving portion (61) has light receiving sensitivity with respect to the wavelength component of the stimulated Raman scattering light higher than light receiving sensitivity with respect to the wavelength component of the signal light.

5. The fiber laser device (1) according to any one of claims 1 and 3, wherein the detector (71) includes:
a light branch portion (47) that branches some of the light emitted from the amplification optical fiber (30); and
a light receiving portion (61) that receives the branched light, and
the light branch portion (47) branches the wavelength component of the stimulated Raman scattering light in preference to the wavelength component of the signal light.

6. The fiber laser device (1) according to any one of claims 1 and 3, wherein the detector (71) includes:
a light branch portion (47) that branches some of the light emitted from the amplification optical fiber (30);
an optical filter (64) that transmits the wavelength component of the stimulated Raman scattering light in preference to the wavelength component of the signal light, out of the branched light; and
a light receiving portion (61) that receives the light transmitted through the optical filter (64).

7. The fiber laser device (1) according to any one of claims 1 and 3, wherein the detector (71) includes:
a photothermal conversion portion (65) that absorbs some of the light emitted from the amplification optical fiber (30) and converts the absorbed light into heat; and
a temperature detector (66) that detects a temperature of the photothermal conversion portion (65), and
the photothermal conversion portion (65) is configured such that absorption efficiency of the wavelength component of the stimulated Raman scattering light is higher than that of the wavelength component of the signal light.

8. The fiber laser device (1) according to any one of claims 1 to 7, wherein the controller (80) controls the power of the pumping light to be small when the power of the light detected by the detector (71) is equal to or greater than a predetermined magnitude.

9. The fiber laser device (1) according to claim 8, wherein the controller (80) returns the power of the pumping light to an original power when the power of the light detected by the detector (71) is smaller than the predetermined magnitude after the power of the pumping light becomes small.

10. The fiber laser device (1) according to claim 8, wherein the controller (80) controls the power of the pumping light to be zero when the power of the light detected by the detector (71) is equal to or greater than the predetermined magnitude.

11. The fiber laser device (1) according to claim 10, wherein the controller (80) returns the power of the pumping light to an original power when the power of the light detected by the detector (71) is smaller than the predetermined magnitude after the power of the pumping light becomes zero.

## Patentansprüche

1. Faserlaservorrichtung (1), die aufweist:
eine Pumplichtquelle (10), die Pumplicht emittiert;
eine optische Verstärkungsfaser (30), die mit einem aktiven Element dotiert ist, das Signallaserlicht verstärkt und emittiert, wenn es von dem Pumplicht gepumpt wird;
einen ersten Spiegel (45), der auf einer Seite der optischen Verstärkungsfaser (30) bereitbestellt ist, um das Signallicht zu reflektieren;
einen zweiten Spiegel (46), der auf der anderen Seite der optischen Verstärkungsfaser (30) bereitgestellt ist, um das Signallicht mit einem niedrigeren Reflexionsvermögen als dem des ersten Spiegels (45) zu reflektieren; wobei die optische Verstärkungsfaser, der erste Spiegel und der zweite Spiegel einen Laserresonator für das Signallaserlicht bilden;
einen Detektor (71), der eine Leistung einer Wellenlängenkomponente des stimulierten Raman-Streulichts detektiert, das aus dem Signallicht erzeugt wird, das von der optischen Verstärkungsfaser (30) bevorzugt gegenüber einer Leistung einer Wellenlängenkomponente des Signallichts verstärkt wird; und
eine Steuerung (80), die eine Leistung des Pumplichts basierend auf der Leistung des von dem Detektor (71) detektierten stimulierten Raman-Streulichts steuert; wobei
der Detektor (71) derart mit einer optischen Faser (52) verbunden ist, dass der Detektor (71) und die optische Faser (52) auf einer Seite des ersten Spiegels (45) angeordnet sind und die optische Verstärkungsfaser (30) auf der anderen Seite des ersten Spiegels (45) angeordnet ist, wobei die optische Faser (52) Licht, das von dem ersten Spiegel (45) emittiert wird, an den Detektor (71) überträgt.

2. Faserlaservorrichtung (1) nach Anspruch 1, wobei der Detektor (71) einen Lichtempfangsabschnitt (61) aufweist, der Licht empfängt, das von dem ersten Spiegel (45) emittiert wird, und
wobei der Lichtempfangsabschnitt (61) eine Lichtempfangsempfindlichkeit in Bezug auf die Wellenlängenkomponente des stimulierten Raman-Streulichts hat, die höher als die Lichtempfangsempfindlichkeit in Bezug auf die Wellenlängenkomponente des Signallichts ist.

3. Faserlaservorrichtung (1) nach Anspruch 1, die ferner eine Abgabefaser (51) aufweist, die Signallaserlicht empfängt, das von dem zweiten Spiegel (46) aus dem Laserresonator übertragen wird.

4. Faserlaservorrichtung (1) nach einem der Ansprüche 1 und 3, wobei der Detektor aufweist:
einen Lichtverzweigungsabschnitt (47), der etwas von dem Licht, das von der optischen Verstärkungsfaser (30) emittiert wird, abzweigt; und
einen Lichtempfangsabschnitt (61), der das abgezweigte Licht empfängt, und
wobei der Lichtempfangsabschnitt (61) eine Lichtempfangsempfindlichkeit in Bezug auf die Wellenlängenkomponente des stimulierten Raman-Streulichts hat, die höher als die Lichtempfangsempfindlichkeit in Bezug auf die Wellenlängenkomponente des Signallichts ist.

5. Faserlaservorrichtung (1) nach einem der Ansprüche 1 und 3, wobei der Detektor (71) aufweist:
einen Lichtverzweigungsabschnitt (47), der etwas von dem Licht, das von der optischen Verstärkungsfaser (30) emittiert wird, abzweigt; und
einen Lichtempfangsabschnitt (61), der das abgezweigte Licht empfängt, und
wobei der Lichtverzweigungsabschnitt (47) die Wellenlängenkomponente des stimulierten Raman-Streulichts bevorzugt gegenüber der Wellenlängenkomponente des Signallichts abzweigt.

6. Faserlaservorrichtung (1) nach einem der Ansprüche 1 und 3, wobei der Detektor (71) aufweist:
einen Lichtverzweigungsabschnitt (47), der etwas von dem Licht, das von der optischen Verstärkungsfaser (30) emittiert wird, abzweigt;
ein optischer Filter (64), die die Wellenlängenkomponente des stimulierten Raman-Streulichts bevorzugt gegenüber der Wellenlängenkomponente des Signallichts aus dem verzweigten Licht überträgt; und
einen Lichtempfangsabschnitt (61), der das durch den optischen Filter (64) übertragene Licht empfängt.

7. Faserlaservorrichtung (1) nach einem der Ansprüche 1 und 3, wobei der Detektor (71) aufweist:
einen fotothermischen Wandlerabschnitt (65), der etwas des von der optischen Verstärkungsfaser (30) emittierten Lichts absorbiert und das absorbierte Licht in Wärme umwandelt; und
einen Temperaturdetektor (66), der eine Temperatur des fotothermischen Wandlerabschnitts (65) detektiert, und
wobei der fotothermischen Wandlerabschnitt (65) derart konfiguriert ist, dass der Absorptionswirkungsgrad der Wellenlängenkomponente des stimulierten Raman-Streulichts höher als der der Wellenlängenkomponente des Signallichts ist.

8. Faserlaservorrichtung (1) nach einem der Ansprüche 1 bis 7, wobei die Steuerung (80) die Leistung des Pumplichts derart steuert, dass sie klein ist, wenn die Leistung des von dem Detektor (71) detektierten Lichts größer oder gleich einem vorgegebenen Betrag ist.

9. Faserlaservorrichtung (1) nach Anspruch 8, wobei die Steuerung (80) die Leistung des Pumplichts auf eine ursprüngliche Leistung rückführt, wenn die Leistung des von dem Detektor (71) detektierten Lichts kleiner als der vorgegebene Betrag ist, nachdem das Pumplicht gering wird.

10. Faserlaservorrichtung (1) nach Anspruch 8, wobei die Steuerung (80) die Leistung des Pumplichts auf null steuert, wenn die Leistung des von dem Detektor (71) detektierten Lichts größer oder gleich dem vorgegebenen Betrag ist.

11. Faserlaservorrichtung (1) nach Anspruch 10, wobei die Steuerung (80), die Leistung des Pumplichts auf eine ursprüngliche Leistung rückführt, wenn die Leistung des von dem Detektor (71) detektierten Lichts kleiner als der vorgegebene Betrag ist, nachdem die Leistung des Pumplichts null wird.

## Revendications

1. Dispositif laser à fibre (1), comprenant :
une source de lumière de pompage (10) qui émet de la lumière de pompage ;
une fibre optique d'amplification (30) dopée avec un élément actif qui amplifie et émet de la lumière laser de signal lorsqu'elle est pompée par la lumière de pompage ;
un premier miroir (45) qui est prévu sur un côté de la fibre optique d'amplification (30) pour réfléchir la lumière de signal ;
un second miroir (46) qui est prévu sur l'autre côté de la fibre optique d'amplification (30) pour réfléchir la lumière de signal à une réflectance inférieure à celle du premier miroir (45) ; dans lequel la fibre optique d'amplification, le premier miroir et le second miroir forment un résonateur laser pour la lumière laser de signal ;
un détecteur (71) qui détecte une puissance d'une composante de longueur d'onde de lumière de diffusion Raman stimulée générée à partir de la lumière de signal amplifiée par la fibre optique d'amplification (30) de préférence jusqu'à une puissance d'une composante de longueur d'onde de la lumière de signal ; et
un dispositif de commande (80) qui commande une puissance de la lumière de pompage sur la base de la puissance de la lumière de diffusion Raman stimulée détectée par le détecteur (71) ; dans lequel
le détecteur (71) est connecté à une fibre optique (52) de telle sorte que le détecteur (71) et la fibre optique (52) soient situés sur un côté du premier miroir (45) et la fibre optique d'amplification (30) soit située sur l'autre côté du premier miroir (45), moyennant quoi la fibre optique (52) transmet de la lumière émise à travers le premier miroir (45) au détecteur (71).

2. Dispositif laser à fibre (1) selon la revendication 1, dans lequel le détecteur (71) inclut une portion de réception de lumière (61) qui reçoit de la lumière transmise à travers le premier miroir (45), et la portion de réception de lumière (61) a une sensibilité de réception de lumière par rapport à la composante de longueur d'onde de la lumière de diffusion Raman stimulée plus élevée que la sensibilité de réception de lumière par rapport à la composante de longueur d'onde de la lumière de signal.

3. Dispositif laser à fibre (1) selon la revendication 1, comprenant en outre une fibre de livraison (51) qui reçoit de la lumière laser de signal transmise hors du résonateur laser à travers le second miroir (46).

4. Dispositif laser à fibre (1) selon l'une quelconque des revendications 1 et 3, dans lequel le détecteur inclut :
une portion de dérivation de lumière (47) qui dérive une certaine partie de la lumière émise à partir de la fibre optique d'amplification (30) ; et
une portion de réception de lumière (61) qui reçoit la lumière dérivée, et
la portion de réception de lumière (61) a une sensibilité de réception de lumière par rapport à la composante de longueur d'onde de la lumière de diffusion Raman stimulée plus élevée que la sensibilité de réception de lumière par rapport à la composante de longueur d'onde de la lumière de signal.

5. Dispositif laser à fibre (1) selon l'une quelconque des revendications 1 et 3, dans lequel le détecteur (71) inclut :
une portion de dérivation de lumière (47) qui dérive une certaine partie de la lumière émise à partir de la fibre optique d'amplification (30) ; et
une portion de réception de lumière (61) qui reçoit la lumière dérivée, et
la portion de dérivation de lumière (47) dérive la composante de longueur d'onde de la lumière de diffusion Raman stimulée de préférence vers la composante de longueur d'onde de la lumière de signal.

6. Dispositif laser à fibre (1) selon l'une quelconque des revendications 1 et 3, dans lequel le détecteur (71) inclut :
une portion de dérivation de lumière (47) qui dérive une certaine partie de la lumière émise à partir de la fibre optique d'amplification (30) ;
un filtre optique (64) qui transmet la composante de longueur d'onde de la lumière de diffusion Raman stimulée de préférence à la composante de longueur d'onde de la lumière de signal, hors de la lumière dérivée ; et
une portion de réception de lumière (61) qui reçoit la lumière transmise à travers le filtre optique (64).

7. Dispositif laser à fibre (1) selon l'une quelconque des revendications 1 et 3, dans lequel le détecteur (71) inclut :
une portion de conversion photothermique (65) qui absorbe une certaine partie de la lumière émise à partir de la fibre optique d'amplification (30) et convertit la lumière absorbée en chaleur ; et
un détecteur de température (66) qui détecte une température de la portion de conversion photothermique (65), et
la portion de conversion photothermique (65) est configurée de telle sorte qu'un rendement d'absorption de la composante de longueur d'onde de la lumière de diffusion Raman stimulée soit plus élevé que celui de la composante de longueur d'onde de la lumière de signal.

8. Dispositif laser à fibre (1) selon l'une quelconque des revendications 1 à 7, dans lequel le dispositif de commande (80) commande la puissance de la lumière de pompage pour être petite lorsque la puissance de la lumière détectée par le détecteur (71) est égale ou supérieure à une amplitude prédéterminée.

9. Dispositif laser à fibre (1) selon la revendication 8, dans lequel le dispositif de commande (80) remet la puissance de la lumière de pompage à une puissance d'origine lorsque la puissance de la lumière détectée par le détecteur (71) est inférieure à l'amplitude prédéterminée après que la puissance de la lumière de pompage devient petite.

10. Dispositif laser à fibre (1) selon la revendication 8, dans lequel le dispositif de commande (80) commande la puissance de la lumière de pompage pour être égale à zéro lorsque la puissance de la lumière détectée par le détecteur (71) est égale ou supérieure à l'amplitude prédéterminée.

11. Dispositif laser à fibre (1) selon la revendication 10, dans lequel le dispositif de commande (80) remet la puissance de la lumière de pompage à une puissance d'origine lorsque la puissance de la lumière détectée par le détecteur (71) est inférieure à l'amplitude prédéterminée après que la puissance de la lumière de pompage devient égale à zéro.
